# FASCICULE DE BREVET EUROPEEN

(11) **EP 3 295 106 B1**
(45) Date de publication et mention de la délivrance du brevet: **13.03.2019**
(21) Numéro de dépôt: 16722219.9
(22) Date de dépôt: 12.05.2016
(51) Int. Cl.: F28D 20/00, F01K 3/12, F22B 1/00, F22B 1/02, F28D 20/02, F01K 5/00

(54) **DISPOSITIF DE STOCKAGE D'ÉNERGIE THERMIQUE**
VORRICHTUNG ZUR SPEICHERUNG VON WÄRMEENERGIE
DEVICE FOR STORING THERMAL ENERGY

(30) Priorité: 13.05.2015 FR 1554297
(43) Date de publication de la demande: 21.03.2018
(73) Titulaire: Commissariat à l'Énergie Atomique et aux Énergies Alternatives, 75015 Paris (FR)
(72) Inventeur: SENECHAL, Benoît, 73490 La Ravoire (FR)
(74) Mandataire: Brizio Delaporte, Allison
(86) Numéro de dépôt international: PCT/EP2016/060689
(87) Numéro de publication internationale: WO 2016/180923

(56) Documents cités:
- WO-A1-2013/034139
- GB-A- 2 493 950
- GB-A- 2 516 453

## Description

### DOMAINE DE L'INVENTION

La présente invention est relative à un dispositif de stockage d'énergie thermique et un procédé de stockage de chaleur. Le domaine de l'invention concerne les Systèmes de Stockage Thermiques (SST) notamment dans des centrales solaires thermodynamiques. Elle concerne plus particulièrement, l'intégration d'un système de stockage thermique dans des centrales solaires à concentration et, plus précisément, pour des centrales à génération directe de vapeur.

### ARRIERE-PLAN TECHNOLOGIQUE

La technologie de stockage de chaleur sensible couramment utilisée dans les centrales solaires à concentration (ou autrement appelées en anglais « Concentrated Solar Power », acronyme « CSP ») met en jeu, comme matériau de stockage de la chaleur, des sels fondus, le plus couramment un mélange de nitrate de sodium et de nitrate de potassium. Ce matériau est entreposé alternativement dans deux réservoirs : un réservoir de stockage d'énergie (ou cuve chaude), lorsque le fluide reçoit de la chaleur d'un fluide principal ou directement à travers le récepteur du champ solaire, et un réservoir de déstockage d'énergie (ou cuve froide), lorsque le fluide cède sa chaleur pour maintenir la production d'électricité.

L'intégration du stockage d'énergie thermique dans une centrale solaire fonctionne selon le principe suivant. Durant la journée, le système de stockage de la centrale fonctionne en mode « stockage d'énergie ». Le fluide traversant le champ solaire est généralement une huile thermique de synthèse, maintenue à quelques bars de pression. Le fluide, après avoir traversé le champ solaire, sort à une haute température, avoisinant par exemple, les 390°C. Une partie du fluide est ensuite dirigée vers un évaporateur, l'autre partie étant dirigée vers le dispositif de stockage. L'évaporateur permet de faire passer de l'eau liquide sous pression sous forme vapeur, laquelle est ensuite envoyée à une turbine pour la production d'électricité. Le débit de fluide envoyé au dispositif de stockage traverse un échangeur thermique pour céder sa chaleur au fluide de stockage, c'est-à-dire couramment à des sels fondus, sous une pression proche de la pression atmosphérique. Les sels fondus sont alors réchauffés, passant selon un exemple d'une température proche de 290°C à une température avoisinant les 380°C environ. L'autre fluide, quant à lui, va sortir des échangeurs de chaleur, par exemple, à une température proche de 300°C, pour être renvoyé vers le champ solaire. Dans ces gammes de température et de pression, l'huile comme les sels fondus, sont sous forme liquide à tout point de fonctionnement, ce qui induit que la chaleur transportée est uniquement sensible.

En l'absence d'ensoleillement, la centrale peut fonctionner en mode « déstockage » d'énergie. La circulation d'huile à travers le champ solaire est arrêtée. Celle-ci est dirigée uniquement vers l'échangeur de chaleur « huile/sels fondus », avec un sens de circulation des fluides inversés par rapport au mode « stockage ». Dans ce mode de réalisation, les sels vont céder leur chaleur à l'huile qui sortira de l'échangeur, par exemple à une température avoisinant les 370°C. Cette huile est alors envoyée dans l'évaporateur pour achever le cycle permettant la transformation de l'eau liquide en vapeur d'eau envoyée vers la turbine pour la production d'électricité.

Ce type de système est utilisable pour les centrales dont le fluide traversant le champ solaire reste monophasique, ce qui est le cas pour les huiles thermiques par exemple.

Dans l'art antérieur, l'eau est proposée comme fluide traversant le champ solaire. Ainsi le champ solaire est alimenté directement en eau liquide sous pression. L'eau s'évapore grâce à l'énergie solaire, puis la vapeur produite est surchauffée, toujours dans le champ solaire, avant d'être envoyée directement dans la turbine. Le stockage de chaleur impose de ce fait de récupérer la chaleur de l'eau, depuis l'état de vapeur surchauffée jusqu'à celui d'eau liquide sous-refroidie.

Le document WO2013/034139 propose de résoudre le problème du suivi du changement de phase de l'eau. Pour cela, l'ensemble de l'énergie de l'eau est stockée dans un matériau de stockage sensible. Le dispositif de stockage de cet art antérieur comprend une première cuve haute température et une deuxième cuve basse température ; lesdites cuves contenant des sels fondus sous forme liquide. Le document propose un échange de chaleur de l'eau avec le matériau de stockage via des échangeurs de chaleur. Une troisième cuve est requise dans ce type de système pour permettre de temporiser le réchauffement / refroidissement du matériau sensible en regard de la désurchauffe / surchauffe de la vapeur d'eau. Le document WO2013/034139 montre un dispositif de stockage d'énergie thermique selon le préambule de la revendication 1.

Pour ce faire, les débits des sels fondus utilisés pour récupérer l'énergie du changement de phase de l'eau sont différents de ceux utilisés pour la désurchauffe de la vapeur d'eau, lors du stockage de l'énergie produite par l'eau. Ceci est rendu possible par la présence de la troisième cuve (dite cuve intermédiaire) ; la différence de débits étant stockée dans cette troisième cuve. En charge, le débit transitant vers la première cuve haute température étant plus faible, les sels admettent un réchauffement plus grand et entrent donc dans cette première cuve à une température plus élevée. Cela permet d'obtenir une température de stockage plus élevée, idéalement proche de la température d'entrée de la vapeur surchauffée en charge, ce qui conduira à produire une vapeur très surchauffée en sortie du stockage en mode décharge, ce qui ne serait pas possible simplement avec deux cuves.

La publication « Comparative system analysis of direct steam génération and synthetic oil parabolic trough power plants with intégration thermal storage" de Solar Energy, 86(2012) 520-530, J. F. Feldhoff et al. propose un système de stockage avec trois cuves de sels fondus destinées à stocker l'énergie sensible et un module de matériau à changement de phase pour l'énergie latente. Au cours de la charge, la vapeur surchauffée issue du champ solaire transfère sa chaleur aux sels fondus circulant entre une cuve tampon et une cuve chaude. La vapeur est ensuite condensée dans le module MCP dans lequel le matériau change de phase, fond, par transfert de chaleur. L'eau, légèrement sous-saturée issue du module MCP transfère ensuite sa chaleur sensible aux sels fondus circulant entre la cuve froide et la cuve tampon. En décharge, le circuit est inversé.

Du fait des faibles différences de températures entre la cuve froide et le module MCP, un plus grand volume de sels est nécessaire dans la cuve froide. En effet, dans l'exemple de la charge, la différence de température dans l'échangeur entre l'eau sortant du le module MCP et les sels fondus issus de la cuve froide est faible. Il est donc nécessaire selon cette publication d'utiliser cette cuve tampon.

En conséquence, les deux échangeurs de chaleur (celui sur l'étage de vapeur surchauffée et celui sur l'étage d'eau sous-saturée) ont des débits différents compensés par la présence de la cuve tampon.

Un des inconvénients de ces systèmes est qu'ils sont économiquement très pénalisés. En effet, dans ce type de circuit fluidique, la nécessité d'une troisième cuve dite intermédiaire engendre un coût de fonctionnement important relatif à la fabrication de la cuve de stockage intermédiaire.

Une autre solution proposée dans cette publication n'utilise que deux cuves de stockage de chaleur sensible avec un échangeur entre lesquels circulent des sels fondus et un module de stockage MCP. Dans cette solution, les deux cuves sont agencées en série avec un échangeur intercalé pour échanger l'énergie thermique entre les sels fondus et l'eau sous forme de vapeur surchauffée circulant dans le circuit parallèle. Le module MCP est placé sur le circuit de l'eau, et a pour but de stocker l'énergie latente et sensible basse température de l'eau. Dans cette solution, il n'y a que deux points de transfert d'énergie thermique : l'un au niveau de l'échangeur, l'autre au niveau du module MCP. Cette solution ne permet donc pas un contrôle optimal de la température de sortie de l'eau condensée en mode charge d'énergie. De plus, un surdimensionnement du module de stockage MCP est nécessaire pour permettre un transfert de chaleur tout de même suffisant.

La présente invention selon l'intitulé des revendications indépendantes 1 et 13 permet de résoudre tout ou, du moins, une partie des inconvénients des techniques actuelles en proposant un dispositif de stockage de chaleur alternatif, simplifié et dont le coût de réalisation et de fonctionnement est amoindri.

### RESUME DE L'INVENTION

Un aspect de l'invention est relatif à un dispositif de stockage d'énergie thermique comprenant un premier fluide circulant dans un premier circuit fluidique comprenant un premier échangeur de chaleur, un deuxième échangeur de chaleur, et un module de stockage latent comprenant un matériau à changement de phase et agencé entre le premier échangeur et le deuxième échangeur, un deuxième fluide circulant dans un deuxième circuit fluidique couplé thermiquement au premier fluide par l'intermédiaire du premier échangeur de chaleur et du deuxième échangeur de chaleur. Ledit deuxième circuit fluidique est constitué de moyens de raccordement et d'un module de stockage de chaleur sensible constitué d'un premier étage de stockage de chaleur sensible haute température et d'un deuxième étage de stockage de chaleur sensible basse température. Selon une possibilité avantageuse, chaque étage de stockage de chaleur sensible ayant une température de consigne contrôlée par la variation du débit du deuxième fluide en sortie et/ou en entrée de chacun des étages.

La présente invention concerne également une centrale solaire thermodynamique comprenant un dispositif selon la présente invention.

La présente invention concerne par ailleurs un procédé de stockage de chaleur comprenant un dispositif selon la présente invention. Le procédé comprend une étape de charge destinée à stocker de la chaleur dans le module de stockage latent et dans le premier étage de stockage de chaleur sensible haute température, comprenant la détermination d'une température de consigne pour le premier fluide en sortie du premier échangeur de chaleur ou d'une première température moyenne dans le premier étage de stockage de chaleur sensible haute température du module de stockage de chaleur sensible et l'adaptation du débit du deuxième fluide en sortie et/ou en entrée de chacun des premier et deuxième étages. Le procédé comprend une étape de décharge destinée à libérer de la chaleur du module de stockage latent et du premier étage de stockage de chaleur sensible haute température, comprenant la détermination d'une température de consigne pour le premier fluide en sortie de du deuxième échangeur de chaleur ou d'une deuxième température moyenne dans le deuxième étage de stockage de chaleur sensible basse température du module de stockage de chaleur sensible et l'adaptation du débit du deuxième fluide en sortie et/ou en entrée de chacun des étages. Dans l'hypothèse de répétition des cycles, la deuxième température moyenne dans le deuxième étage de stockage de chaleur sensible basse température du module de stockage de chaleur sensible après la décharge doit être cohérente avec la première température moyenne dans le deuxième étage de stockage de chaleur sensible basse température du module de stockage de chaleur sensible utilisée en début de charge.

La présente invention propose de séparer le stockage de chaleur en plusieurs étages afin de suivre la variation de température de l'eau. Ceci est possible en mettant en oeuvre un matériau à changement de phase (acronyme « MCP ») pour récupérer l'énergie latente de l'eau. Ainsi, la présente invention propose l'utilisation d'un étage de stockage de chaleur sensible haute température, un étage latent au moyen d'un module de stockage latent comprenant un matériau à changement de phase et un étage de stockage de chaleur sensible basse température. Le dispositif de l'invention comprend deux échangeurs de chaleur dont l'un est agencé au niveau de l'étage de stockage de chaleur sensible haute température et l'autre est agencé au niveau de l'étage de stockage de chaleur sensible basse température. On entend par « agencé au niveau de l'étage de stockage de chaleur sensible haute température » que l'échangeur est en connexion thermique avec le deuxième fluide au niveau de l'étage de stockage de chaleur sensible haute température. On entend par « agencé au niveau de l'étage de stockage de chaleur sensible basse température » que l'échangeur est en connexion thermique avec le deuxième fluide au niveau de l'étage de stockage de chaleur sensible basse température. De manière particulièrement avantageuse, afin de séparer les stockages d'énergies sensible et latente, la présente invention propose d'éviter de multiplier le nombre de cuves et économise, de ce fait, la quantité de sels fondus. Cela consiste à utiliser le même fluide de stockage pour l'étage de stockage de chaleur haute température et pour l'étage de stockage de chaleur basse température, les étages étant ainsi combinés entre eux.

L'invention permet de manière avantageuse de réaliser un ajustement combiné des températures des cuves afin d'obtenir un même débit pour les deux étages de stockage, avec la possibilité d'une éventuelle recirculation de débit du deuxième fluide si nécessaire ; la cuve intermédiaire devenant ainsi inutile.

Un effet technique produit par la présente invention est ainsi de grouper en un seul et même système de stockage les deux étages de stockage haute et basse températures, en supprimant la cuve intermédiaire. De manière particulièrement avantageuse, cet agencement des étages de stockage permet de réduire les coûts de fabrication et de fonctionnement du dispositif de stockage. Le procédé de fabrication d'un tel dispositif est également considérablement simplifié.

### BREVE INTRODUCTION DES FIGURES

Les buts, objets, ainsi que les caractéristiques et avantages de l'invention ressortiront mieux de la description détaillée d'un mode de réalisation de cette dernière, qui est illustré par les dessins d'accompagnement suivants, dans lesquels:
- La figure 1 illustre un dispositif de stockage selon la présente invention.
- Les figures 2a, 2b illustrent la circulation des fluides dans un dispositif selon la figure 1 lors d'une étape de décharge d'énergie sans recirculation (2a) et avec recirculation (2b).
- Les figures 3a, 3b illustrent la circulation des fluides dans un dispositif selon la figure 1 lors d'une étape de charge d'énergie sans recirculation (3a) et avec recirculation (3b).
- La figure 4 est un graphe représentant l'évolution de la température du premier fluide relevée de part et d'autre du module de stockage latent lors d'un cycle de charge-décharge.
- La figure 5 est un graphe représentant l'évolution du débit massique de vapeur au niveau du point d'accès 301 du module de stockage latent lors d'un cycle de charge-décharge.
- Les figures 6 représentent l'évolution des températures des fluides lors d'un cycle de charge-décharge sans recirculation (6a) et avec recirculation (6b).
- La figure 7 illustre un dispositif de stockage selon un autre mode de réalisation de la présente invention.
- La figure 8 illustre un dispositif de stockage selon un encore autre mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DETAILLEE

Avant d'entamer une revue détaillée de modes de réalisation de l'invention, sont énoncées ci-après des caractéristiques optionnelles qui peuvent éventuellement être utilisées suivant toute association ou alternativement.

Il convient de rappeler que l'invention concerne un dispositif de stockage d'énergie thermique comprenant : un premier fluide circulant dans un premier circuit fluidique comprenant un premier échangeur de chaleur, un deuxième échangeur de chaleur, et un module de stockage latent comprenant un matériau à changement de phase agencé entre le premier échangeur et le deuxième échangeur, un deuxième fluide circulant dans un deuxième circuit fluidique couplé thermiquement au premier fluide par l'intermédiaire du premier échangeur de chaleur et du deuxième échangeur de chaleur, caractérisé en ce que ledit deuxième circuit fluidique est constitué de moyens de raccordement et d'un module de stockage de chaleur sensible constitué d'un premier étage de stockage de chaleur sensible haute température et d'un deuxième étage de stockage de chaleur sensible basse température, chaque étage de stockage de chaleur sensible ayant une température de consigne contrôlée par la variation du débit du deuxième fluide en sortie et/ou en entrée de chacun des étages.

Avantageusement, le deuxième circuit fluidique ne comprend pas de module de stockage de chaleur intermédiaire.

Avantageusement, le seul module de stockage du deuxième circuit fluidique est ledit module de stockage de chaleur sensible constitué dudit premier étage de stockage de chaleur sensible haute température et dudit deuxième étage de stockage de chaleur sensible basse température.

Avantageusement, le deuxième circuit comprend des moyens de contrôle du débit du deuxième fluide en entrée et/ou sortie des échangeurs.

Avantageusement, le débit du deuxième fluide est identique dans tout le circuit du deuxième fluide.

Avantageusement, les moyens de raccordement dans le deuxième circuit fluidique comprennent des moyens de recirculation du deuxième fluide au niveau du premier échangeur et/ou du deuxième échangeur.

Avantageusement, les moyens de recirculation comprennent des branches de recirculation agencées entre l'étage de stockage de chaleur sensible haute température et le premier échangeur et entre l'étage de stockage de chaleur sensible basse température et le deuxième échangeur.

Avantageusement, le débit du deuxième fluide est différent au niveau du premier échangeur et du deuxième échangeur.

Avantageusement, le dispositif comprend des moyens de circulation configurés pour mettre en mouvement le deuxième fluide dans le deuxième circuit fluidique.

Avantageusement, le premier étage de stockage de chaleur haute température et le deuxième étage de stockage de chaleur basse température sont réunis pour former une cuve.

Avantageusement, la cuve définit un volume intérieur comprenant un matériau poreux et/ou structuré.

Avantageusement, le matériau poreux est choisi parmi un lit de roches, des briques.

Avantageusement, le premier échangeur et le deuxième échangeur sont réunis dans une enceinte.

Avantageusement, le deuxième fluide est choisi parmi l'un au moins parmi des sels fondus, l'air, ou l'eau.

Avantageusement, le premier fluide est configuré pour passer d'une phase vapeur à une phase liquide et inversement dans le dispositif.

Avantageusement, le premier fluide est de l'eau.

Avantageusement, le matériau à changement de phase est choisi parmi des sels, des mélanges de sels, des hydrocarbures, des acides gras, des polyols ou des alliages métalliques.

Avantageusement, le premier circuit fluidique comprend un champ solaire au travers duquel circule le premier fluide.

Suivant un autre aspect, l'invention concerne une centrale solaire thermodynamique comprenant un dispositif tel que décrit ci-dessus.

Avantageusement, la centrale solaire est à génération de vapeur directe.

Suivant un autre aspect, l'invention concerne un procédé de stockage de chaleur comprenant un dispositif tel que décrit ci-dessus comprenant : une étape de charge destinée à stocker de la chaleur dans le premier étage de stockage de chaleur sensible haute température et dans le module de stockage latent comprenant la détermination d'une température de consigne pour le premier fluide en sortie du premier échangeur de chaleur ou d'une première température de consigne dans le premier étage de stockage de chaleur sensible haute température du module de stockage de chaleur sensible et l'adaptation du débit du deuxième fluide en sortie et/ou en entrée de chacun des premier et deuxième étages et une étape de décharge destinée à libérer de la chaleur du deuxième étage de stockage de chaleur sensible basse température et le module de stockage l'étage latent comprenant la détermination d'une température de consigne pour le premier fluide en sortie de du deuxième échangeur de chaleur ou d'une deuxième température de consigne dans le deuxième étage de stockage de chaleur sensible basse température du module de stockage de chaleur sensible et l'adaptation du débit du deuxième fluide en sortie et/ou en entrée de chacun des étages.

Avantageusement, le débit du deuxième fluide en sortie du deuxième étage de stockage de chaleur sensible basse température est identique au débit du deuxième fluide en entrée du premier étage de stockage de chaleur sensible haute température.

Avantageusement, l'étape de charge une recirculation du deuxième fluide au niveau du premier échangeur consistant à mélanger du deuxième fluide en provenance du premier étage de stockage de chaleur sensible haute température au deuxième fluide en provenance deuxième échangeur de chaleur.

Avantageusement, le procédé comprend dans l'étape de décharge une recirculation du deuxième fluide au niveau du deuxième échangeur consistant à mélanger du deuxième fluide en provenance du deuxième étage de stockage de chaleur sensible basse température au deuxième fluide en provenance du premier échangeur.

L'invention concerne un dispositif de stockage de chaleur. On entend par chaleur « sensible », la quantité de chaleur qui est échangée sans transition de phase physique, entre plusieurs corps formant un système isolé. Elle est qualifiée de « sensible » parce que cet échange de chaleur, sans changement de phase, change la température du corps, effet qui peut être ressenti ou mesuré. En cela, la chaleur « sensible » s'oppose à la chaleur « latente » qui, elle, est absorbée lors d'un changement de phase, sans changement de température.

On entend par module de stockage un dispositif comprenant un matériau de stockage et son conditionnement.

Le premier circuit fluidique comprend un premier échangeur 210, un module de stockage latent 300 et un deuxième échangeur 220.

Lors de la charge, le premier fluide traverse le premier échangeur 210 en entrant par un premier accès 211 et en sortant par un deuxième accès 212 dudit premier échangeur 210, puis traverse le module de stockage latent 300 en entrant par un premier accès 301 et en sortant par un deuxième accès 302 dudit module de stockage latent 300, puis le premier fluide traverse le deuxième échangeur 220 en entrant par un premier accès 221 et en sortant par un deuxième accès 222.

Lors de la décharge, le premier fluide circule dans le sens inverse. Le premier fluide traverse le deuxième échangeur 220 en entrant par le deuxième accès 222 et en sortant par le premier accès 221 dudit deuxième échangeur 220, puis traverse le module de stockage latent 300 en entrant par le deuxième accès 302 et en sortant par le premier accès 301 dudit module de stockage latent 300, puis le premier fluide traverse le premier échangeur 210 en entrant par le deuxième accès 212 et en sortant par le premier accès 211 dudit premier échangeur 210. Le premier échangeur 210, le module de stockage latent 300 et le deuxième échangeur 220 sont raccordés par des moyens de raccordement. Les moyens de raccordement sont une canalisation simple ou un réseau de canalisations. Le deuxième accès 212 du premier échangeur 210 est raccordé fluidiquement au premier accès 301 du module de stockage latent 300. Le deuxième accès 302 du module de stockage latent 300 est raccordé fluidiquement au premier accès 221 du deuxième échangeur 220. Avantageusement, le premier circuit fluidique comprend un champ solaire. Ainsi, le premier fluide traverse un champ de capteurs solaires au travers duquel ledit premier fluide se réchauffe. Le premier fluide est préférentiellement un fluide caloporteur. Avantageusement, le premier fluide est un fluide à deux phases, vapeur et liquide. Le premier fluide est choisi pour prendre alternativement ou simultanément deux phases dans les conditions d'utilisations du dispositif selon l'invention. A titre d'exemple préféré, le premier fluide est de l'eau.

Le stockage de l'énergie latente est réalisé dans le module de stockage latent 300. Ce module 300 est de préférence passif, au sens où le matériau de stockage est conservé sans circulation forcée dans le volume de sa cuve. Le module de stockage latent 300 comprend un matériau à changement de phase (MCP). A titre d'exemple, le MCP est choisi parmi des sels ou des mélanges de sels, avec comme exemple préféré le nitrate de sodium (NaNO3), des hydrocarbures, des acides gras, des polyols ou des alliages métalliques.

Dans le cas du stockage thermique, il y a échange entre le premier fluide dit caloporteur qui circule dans le premier circuit fluidique et le matériau à changement de phase qui est contenu dans le module de stockage latent 300. Lors de la charge, le premier fluide caloporteur arrive dans le module de stockage latent 300 à une température supérieure à la température de transition du matériau à changement de phase et cède de l'énergie à celui-ci, ce qui entraine son changement de phase, par exemple par fusion. Lors de la décharge, le premier fluide caloporteur entre dans le module de stockage latent 300 à une température inférieure à la température de transition du matériau à changement de phase et récupère l'énergie précédemment stockée, ce qui entraine le changement de phase, par exemple par solidification, du matériau à changement de phase.

Le dispositif comprend un deuxième circuit fluidique dans lequel circule un deuxième fluide. Avantageusement, le deuxième fluide comprend au moins l'un parmi les sels fondus, l'air, l'eau. Le deuxième circuit fluidique comprend avantageusement un module de stockage de chaleur sensible. Selon l'invention, le deuxième circuit fluidique ne comprend qu'un module de stockage de chaleur sensible. Le deuxième circuit fluidique est constitué d'un module de stockage de chaleur sensible, de moyens de raccordement et d'organes de circulation du deuxième fluide. Selon l'invention, le module de stockage de chaleur sensible est constitué d'un premier étage 110 de stockage de chaleur sensible haute température et d'un deuxième étage 120 de stockage de chaleur sensible basse température.

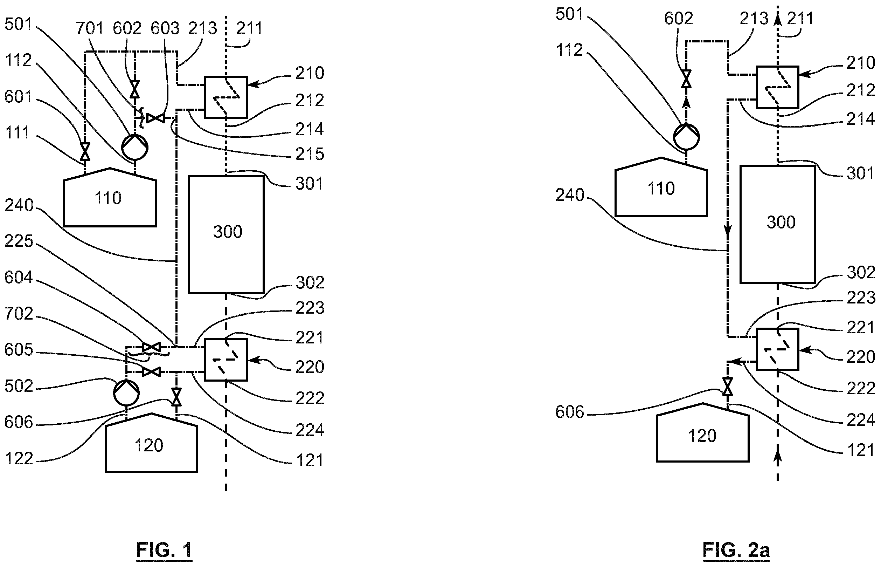

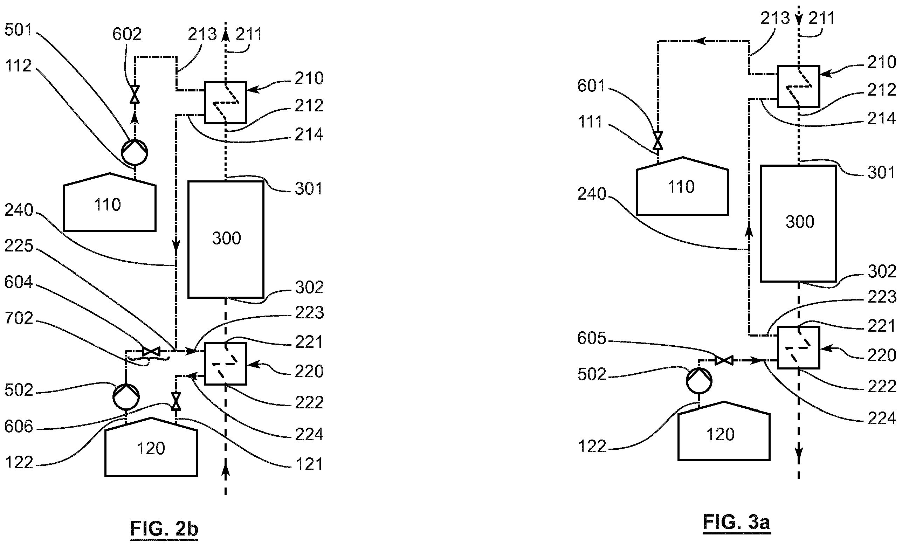

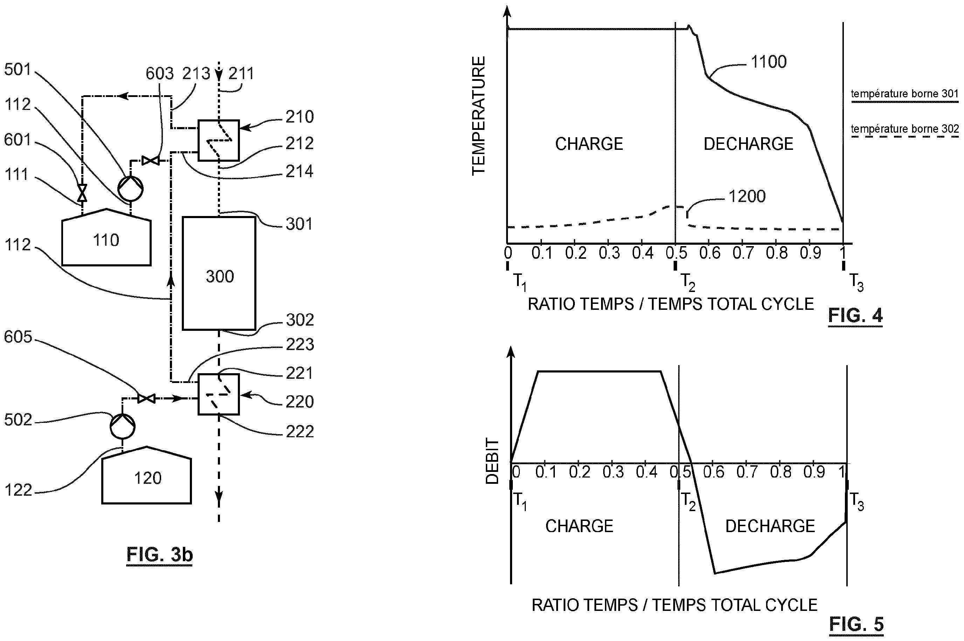

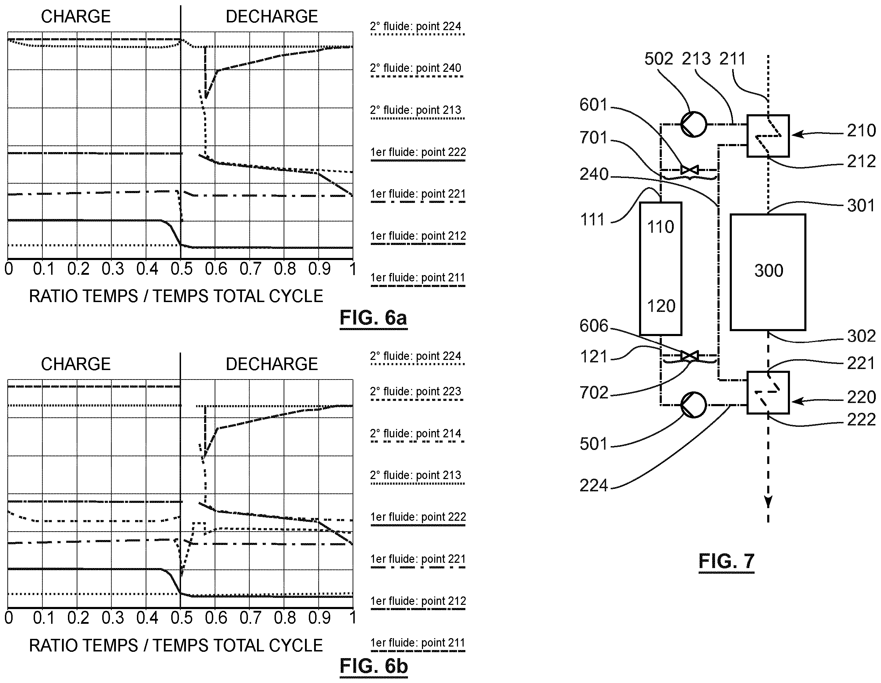

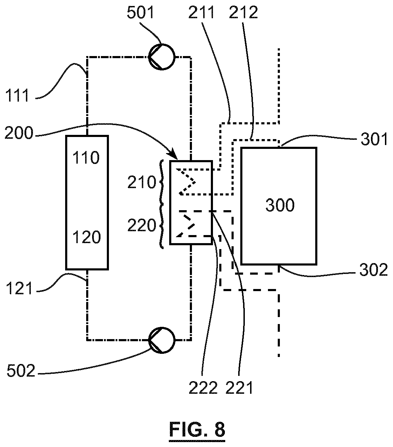

On entend par haute température et basse température que la température de l'étage de stockage de chaleur sensible haute température est supérieure à la température de l'étage de stockage latent, et que la température de l'étage de stockage de chaleur sensible basse température est inférieure à la température de l'étage de stockage latent. Les deux étages du module de stockage de chaleur sensible 110, 120 peuvent être constitués de deux cuves distinctes comme illustré aux figures 2 et 3 ou bien d'une cuve unique regroupant les deux étages comme illustré aux figures 7 et 8. Il peut être utilisé dans la suite de la description les termes cuve chaude et cuve froide en synonyme de premier étage 110 de stockage de chaleur sensible haute température et de deuxième étage 120 de stockage de chaleur sensible basse température.

Le deuxième circuit fluidique comprend des moyens de recirculation du deuxième fluide.

Les moyens de recirculation comprennent avantageusement une branche de recirculation 701 disposée au niveau du premier étage de stockage de chaleur sensible haute température 110 et une branche de recirculation 702 disposée au niveau du deuxième étage de stockage de chaleur sensible basse température 120.

Les branches de recirculation 701, 702 sont formées de canalisation et moyen de mélange configurés pour assurer une injection du deuxième fluide provenant de l'étage de stockage de chaleur sensible haute température 110 ou de l'étage de stockage de chaleur sensible basse température 120 dans le flux du deuxième fluide provenant respectivement de l'autre étage.

Un premier accès 111 du premier étage 110 de stockage de chaleur sensible haute température est raccordé fluidiquement à un troisième accès 213 du premier échangeur 210.

Un deuxième accès 112 du premier étage 110 de stockage de chaleur sensible haute température est également raccordé fluidiquement au troisième accès 213 du premier échangeur 210.

Le deuxième accès 112 est également raccordé fluidiquement à un quatrième accès 214 du premier échangeur 210 par une branche de recirculation 701. Le premier accès 111 et le deuxième accès 112 sont raccordés fluidiquement.

En décharge, le deuxième fluide traverse le premier échangeur 210 entre le troisième accès 213 et un quatrième accès 214. Le quatrième accès 214 du premier échangeur 210 est raccordé fluidiquement à un troisième accès 223 du deuxième échangeur 220 par un moyen de raccordement correspondant à un point intermédiaire 240, par exemple, une canalisation. On entend par point intermédiaire 240, la zone de circulation du deuxième fluide située entre les premier et le deuxième échangeurs 210, 220.

Un premier accès 121 du deuxième étage 120 de stockage de chaleur sensible basse température est raccordé fluidiquement à un quatrième accès 224 du deuxième échangeur 220. Un deuxième accès 122 du deuxième étage 120 de stockage de chaleur sensible basse température est également raccordé fluidiquement au quatrième accès 224 du deuxième échangeur 220.

Le deuxième accès 122 est également raccordé fluidiquement à un troisième accès 223 du deuxième échangeur 220 par une branche de recirculation 702. Le premier accès 121 et le deuxième accès 122 sont raccordés fluidiquement.

Selon un mode de réalisation possible illustré en figure 8, le premier et le deuxième échangeur 210, 220 sont regroupés dans une seule enceinte 200. Le point intermédiaire 240, se situe ici dans l'enceinte 200 entre les premier et deuxième échangeurs 210, 220.

Les premier et deuxième échangeurs 210, 220 forment un seul échangeur 200 conservant les différents accès du premier fluide décrits ci-dessus à savoir les accès 211,212, 221, 222. Le deuxième circuit fluidique est lui simplifié pour ne conserver que les accès 213 et 224. Les accès 214 et 223 n'étant plus nécessaires.

De manière particulièrement avantageuse, le dispositif selon la présente invention ne comprend pas de cuve (ou d'étage) intermédiaire positionnée entre le premier échangeur 210 et le deuxième échangeur 220 pour le deuxième circuit fluidique.

Le deuxième fluide traverse le deuxième échangeur 220 entre le troisième accès 223 et le quatrième accès 224 du deuxième échangeur 220 où il échange de l'énergie avec le premier fluide circulant dans le premier circuit fluidique. Le quatrième accès 224 du deuxième échangeur 220 est raccordé fluidiquement au deuxième étage 120 de stockage de chaleur sensible basse température.

Lors d'un cycle charge-décharge, le deuxième fluide est couplé thermiquement au premier fluide par l'intermédiaire du premier échangeur 210 et du deuxième échangeur 220. Le deuxième fluide échange ainsi de l'énergie avec le premier fluide.

Le deuxième circuit fluidique est préférentiellement un circuit fermé. Le deuxième fluide est mis en mouvement dans le deuxième circuit fluidique par au moins un moyen de circulation 501, 502. Les moyens de circulations sont configurés pour mettre en mouvement le deuxième fluide dans les deux sens possibles de circulation.

Selon un mode de réalisation préféré, un premier moyen de circulation 501 est positionné entre le premier étage 110 de stockage de chaleur sensible haute température du module de stockage de chaleur sensible et le premier échangeur 210 et/ou un deuxième moyen de circulation 502 est positionné entre le deuxième étage 120 de stockage de chaleur sensible basse température du module de stockage de chaleur sensible et le deuxième échangeur 220. A titre préféré, le premier moyen de circulation 501 et le deuxième moyen de circulation 502 sont choisis parmi une ou plusieurs pompes ou un ou plusieurs ventilateurs.

Le dispositif selon l'invention comprend des moyens de contrôle du débit du deuxième fluide dans le deuxième circuit fluidique. A titre d'exemple les moyens de contrôle du débit sont des vannes de régulation 601, 602, 603, 604, 605, 606.

Le dispositif selon l'invention illustré à la figure 1 peut fonctionner suivant deux stratégies de fonctionnement: sans ou avec recirculation illustrées respectivement aux figures 2a- 3a et 2b- 3b. On notera que sur ces figures sont représentés uniquement les éléments du dispositif utilisés pour l'étape de charge ou de décharge. Le fonctionnement avec recirculation permet une plus grande souplesse de fonctionnement.

Dans la stratégie sans recirculation, illustrée aux figures 2a, 3a, seule une pompe 501, 502 fonctionne à la fois, et les débits du deuxième fluide traversant les deux échangeurs 210, 220 sont identiques.

Dans la stratégie avec recirculation, illustrée aux figures 2b, 3b, les deux pompes 501, 502 fonctionnent simultanément pour permettre un remélange par les branches de recirculation 701, 702 sur le deuxième circuit fluidique aux points intermédiaires 215, 225 situés entre les deux échangeurs 210, 220. Ce remélange a lieu avec du fluide en provenance de la cuve chaude 110 en charge, et avec du fluide en provenance de la cuve froide 120 en décharge. Un ensemble de vannes de régulation 601, 602, 603, 604, 605 et 606 sont prévues à cet effet.

L'avantage de la stratégie sans recirculation est qu'elle permet d'utiliser une masse inférieure du matériau de stockage, ici constitué par le deuxième fluide. Cependant, elle ne permet pas un contrôle aussi fin des températures des cuves tel que permis dans la stratégie avec recirculation. Dans la stratégie mettant en oeuvre une recirculation, la température des cuves est ajustée grâce au débit de recirculation permettant de contrôler la température du deuxième fluide à un point intermédiaire 240 aux deux échangeurs 210, 220, ce qui peut également éviter dans certains cas de décharge d'obtenir des phénomènes d'ébullition sous-saturée dans l'échangeur 220, et éviter dans certains cas de charge d'obtenir des phénomènes de condensation sursaturée dans l'échangeur 210. En décharge, suivant la nécessité d'abaisser la température du deuxième fluide avant de traverser le deuxième échangeur 220, un débit du deuxième fluide provenant de la cuve froide 120 peut être mélangé au niveau de la branche de recirculation 702, au point de recirculation 225, avec celui arrivant depuis le quatrième accès 214 du premier échangeur 210 ou à l'inverse en charge suivant la nécessité d'augmenter la température du deuxième fluide avant de traverser le premier échangeur 210, un débit du deuxième fluide provenant de la cuve chaude 110 peut être mélangé, au niveau de la branche de recirculation 701 au point de recirculation 215, avec celui arrivant du troisième accès 223 du deuxième échangeur 220.

A titre d'exemple, lors de la charge, le premier fluide caloporteur arrive à haute température avoisinant par exemple les 470°C par un moyen de raccordement dans le premier échangeur 210 où il cède de la chaleur au deuxième fluide. Il traverse ensuite le module de stockage latent 300 où il cède de l'énergie au matériau à changement de phase, entrainant le changement de phase par exemple par fusion de ce dernier. Le premier fluide traverse enfin le deuxième échangeur où il cède à nouveau de la chaleur au deuxième fluide. A la sortie du deuxième échangeur 220, le premier fluide, ayant cédé de la chaleur, avoisine une température par exemple de 220°C. Au cours de la décharge, le premier fluide arrive à basse température par un moyen de raccordement dans le deuxième échangeur 220 où il récupère de la chaleur du deuxième fluide. Il traverse ensuite le module de stockage latent 300 où il échange de l'énergie avec le matériau à changement de phase qui change de phase. Il traverse ensuite le premier échangeur 210 où il récupère de la chaleur du deuxième fluide.

La figure 4 représente les variations des températures du premier fluide relevées aux bornes 301, 302 du module de stockage latent 300 sur un cycle de charge et de décharge, obtenu par simulation/modélisation.
L'axe des abscisses représente le ratio entre le temps écoulé et le temps total d'un cycle charge + décharge, et l'axe des ordonnées représente les températures, aucune valeur n'est donnée sur cet axe. Sur cette figure 4, la première courbe de température 1100 représente la température du premier fluide relevée entre le premier échangeur 210 et l'entrée du module de stockage latent 300 sur un cycle charge-décharge, borne 301 ; dans le cas de l'eau, le premier fluide se présentant sur ce trajet sous forme de vapeur d'eau surchauffée ou saturée. La deuxième courbe de température 1200 représente la température du premier fluide entre la sortie du module de stockage latent 300 et le deuxième échangeur 220 sur un cycle charge-décharge, borne 302 ; dans le cas de l'eau, le premier fluide se présentant alors sur ce trajet sous forme d'eau liquide sous- refroidie.

La charge du module de stockage latent 300 débute à peu près à un temps t1 avec une stabilisation de la première courbe de température 1100 relevée à la borne 301 jusqu'à un temps t2. Le plateau de température correspond au point nominal de charge du module de stockage latent 300 ; la charge se terminant peu après le temps t2. Durant la phase de charge, la deuxième courbe de température 1200 qui permet de suivre la température de l'eau condensée relevée à la borne 302 est presque constante.

Il s'en suit ensuite la phase de décharge d'énergie, avec une température d'alimentation de l'eau liquide au bas du module de stockage latent 300, borne 302, approximativement constante, courbe 1200. Le module de stockage latent 300 ne pouvant fournir une puissance constante mais décroissante, car le module de stockage latent 300 demeure passif, le débit de vapeur produite va également décroitre avec le temps, impliquant un débit de la turbine décroissant et par conséquent une pression dans le dispositif qui va diminuer au cours de la décharge. Or, la température relevée à la sortie du module de stockage latent 300, borne 301, étant la température de saturation de l'eau, celle-ci décroit, courbe 1100, suivant la pression. C'est ce que représente l'allure de la première courbe de température 1100 entre les temps t2 et t3 ; le temps t3 correspondant au temps de fin de décharge. Au temps t3, le module de stockage latent est isolé pour la nuit (fin du cycle). Ainsi, lors de l'étape de décharge d'énergie, le module de stockage latent 300 étant passif, la puissance délivrée par celui-ci n'est pas maitrisée et n'est pas fixe dans le temps mais décroissante. Cela implique une courbe de débit de vapeur produite « glissante » avec le temps, confère figure 5 décrite ci-après. La courbe de pression, non représentée, suit la même tendance puisqu'étant dépendante du débit envoyé à la turbine.

La figure 5 illustrant le débit du premier fluide au niveau de la borne 301 indique que ce débit est constant et positif lors de la charge et négatif lors de la décharge, le premier fluide circulant alors en sens inverse. Lors de l'étape de charge d'énergie, la courbe de débit de vapeur surchauffée entrant dans module de stockage de chaleur latente 300 suit au premier ordre l'ensoleillement, ce qui donne une évolution en forme de « cloche » entre les temps t1 et t2. Lors de l'étape de décharge d'énergie, le module de stockage latent 300 étant passif, la puissance délivrée par celui-ci n'est pas maitrisée et n'est pas fixe dans le temps mais décroissante. Cela implique que la courbe de débit de vapeur sortant du module de stockage de chaleur latente 300 est une « glissante » avec le temps.

Afin de déterminer les paramètres pour le fonctionnement du dispositif de stockage de chaleur, on réalise au préalable une étape de modélisation de type dynamique du dispositif, le stockage d'une centrale ayant un fonctionnement continuellement transitoire. Lors de l'étape de modélisation, l'étage de stockage latent est ramené à un seul tube sans effets de bord. En ce qui concerne les fluides, les équations concernant le bilan de masse, le bilan d'énergie et le bilan de quantité de mouvement sont résolues pour chacune des deux phases (liquide et vapeur). Le modèle utilisé permet de simuler le fonctionnement du dispositif de stockage avec un calcul de couplage entre les étages latent et sensibles réalisé à l'extérieur du modèle de l'étage latent. Les première et deuxième courbes de températures 1100, 1200 ont été exploitées dans un calcul plus global prenant en compte le premier échangeur de chaleur 210 échangeant les températures du premier fluide (sous forme vapeur) et du deuxième fluide (sous forme de sels fondus) pour l'étage haute température 110 et le deuxième échangeur 220 échangeant les températures du premier fluide (sous forme d'eau liquide) et du deuxième fluide (sous forme de sels fondus) pour l'étage basse température 120. Dans les calculs, les premier et deuxième échangeurs 210, 220 ont une surface d'échange fixée et leur coefficient d'échange global, dépend des débits des deux fluides suivant des lois adaptées.

Les résultats sont donnés aux figures 6a, 6b. Sont représentées sur ces deux graphes les températures des deux fluides à différents points des circuits sur un cycle charge-décharge respectivement sans et avec recirculation.

On constate sur le graphe sans recirculation 6a que les courbes des températures du premier fluide le long du premier circuit fluidique sont globalement stables, les variations constatées après le début de la décharge résultent de l'inversion du sens de circulation du premier fluide. Ainsi, si le premier fluide est de l'eau, il faut définir des températures en charge après le premier échangeur 210, point 212, correspondant à de la vapeur désurchauffée. Les courbes des températures du deuxième fluide le long du deuxième circuit fluidique sont stables pour ce qui est des cuves chaude et froide, respectivement points 213 et 224. Toutefois, la température au point intermédiaire 240 varie entre la charge et la décharge. C'est grâce à cette variation de la température au point intermédiaire 240 que les débits du deuxième fluide en entrée et/ou en sortie des différents étages de stockage haute et basse température sont identiques ne nécessitant alors pas de cuve ou étage de stockage sensible intermédiaire comme dans l'état de la technique.

On constate sur le graphe avec recirculation 6b que les courbes des températures du premier fluide le long du premier circuit fluidique sont globalement stables et sont équivalentes au graphe sans recirculation 6a. Les courbes des températures du deuxième fluide le long du deuxième circuit fluidique sont stables pour ce qui est des cuves chaude et froide, respectivement points 213 et 224. Toutefois, la température au point intermédiaire 240 correspondant sur ces courbes à la température aux point 214 et/ou 223 ; 223 en charge et 214 en décharge, varie entre la charge et la décharge comme dans le cas du fonctionnement sans recirculation. Les débits du deuxième fluide en entrée et/ou en sortie des différents étages de stockage haute et basse température sont ici différents du fait de la recirculation du deuxième fluide respectivement dans les branches de recirculation 701, 702.

Le procédé de stockage de chaleur selon la présente invention comprend de préférence une étape de charge et une étape de décharge. L'étape de charge est destinée à stocker de la chaleur dans le premier étage 110 de stockage de chaleur sensible haute température et dans l'étage latent. L'étape de charge comprend la détermination d'une température de consigne pour le premier fluide à l'accès 212 de l'échangeur de chaleur 210 ou d'une première température de consigne dans le premier étage 110 de stockage de chaleur sensible haute température du module de stockage de chaleur sensible et l'adaptation du débit du deuxième fluide en sortie et/ou en entrée de chacun des premier et deuxième étages 110, 120, permettant de maintenir ces températures de consigne.

L'étape de décharge, quant à elle, est destinée à libérer de la chaleur du premier étage 110 de stockage de chaleur sensible haute température. L'étape de décharge comprend la détermination d'une température de consigne pour le premier fluide à l'accès 221 de l'échangeur de chaleur 220 ou d'une deuxième température de consigne constante dans le deuxième étage de stockage 120 de chaleur sensible basse température du module de stockage de chaleur sensible et l'adaptation du débit du deuxième fluide en sortie et/ou en entrée de chacun des premier et deuxième étages 110, 120, permettant de maintenir ces températures de consigne.

Les débits en charge et décharge sont réglés via le contrôle du régime des équipements de circulation (pompe ou ventilateur) et/ou via l'ouverture de vannes de régulation 601, 602, 603, 604, 605, 606 positionnées sur le deuxième circuit fluidique.

C'est-à-dire qu'en charge, la température de consigne pour le premier fluide à l'accès 212 du premier échangeur 210 est choisie pour correspondre à une température légèrement supérieure au changement d'état du premier fluide, dans le cas de l'eau équivalent à la température d'une vapeur surchauffée. A l'inverse en décharge, la température de consigne pour le premier fluide à l'accès 221 du deuxième échangeur 220 est choisie pour correspondre à une température légèrement inférieure au changement d'état d'un premier fluide, dans le cas de l'eau équivalent à l'eau sous refroidie.

La deuxième température dans le premier étage 110 de stockage de chaleur sensible haute température du module de stockage de chaleur sensible est déterminé par la charge précédente. La première température dans le deuxième étage 120 de stockage de chaleur sensible basse température du module de stockage de chaleur sensible est déterminé par la décharge précédente.

De manière particulièrement avantageuse, la première température du deuxième étage 120 relevée lors de l'étape de charge est cohérente avec la température du deuxième étage 120 relevée lors de l'étape de décharge précédente, et la deuxième température du premier étage 110 relevée lors de l'étape de décharge est cohérente avec la première température du deuxième étage 110 relevée lors de l'étape de charge précédente.

Pour des jours successifs présentant un ensoleillement identique, la température moyenne dans le premier étage 110 de stockage de chaleur sensible haute température peut demeurer à la même température lors d'un cycle de charge-décharge.

Dans le dispositif selon la présente invention, la température du deuxième fluide au point 213 du premier échangeur 210 au cours de la charge d'énergie peut varier autour d'une valeur de consigne avec une tolérance dépendant des performances visées de l'installation de stockage. De même, la température du deuxième fluide au point 224 du deuxième échangeur 220 au cours de la décharge d'énergie peut varier autour d'une valeur de consigne avec une tolérance dépendant des performances visées de l'installation de stockage. La masse du deuxième fluide utilisée lors de la charge dans le premier étage 110 de stockage de chaleur sensible haute température reste avantageusement identique à celle utilisée dans le deuxième étage 120 de stockage de chaleur sensible basse température lors de la décharge. Ainsi, l'énergie mise en jeu dans le module de stockage latent reste la même lors de la charge et de la décharge.

La présente invention peut s'appliquer à tous les stockages utilisant des échangeurs de chaleur et un matériau de stockage, celui-ci pouvant être directement le deuxième fluide ou bien un matériau supplémentaire ajouté au système, sous forme de fluide ou non. Selon un exemple, les sels fondus du module de stockage de chaleur sensible peuvent être remplacés par de l'air échangeant la chaleur de l'eau ou de la vapeur d'eau par l'intermédiaire des échangeurs de chaleur. Le stockage d'énergie est réalisé par exemple dans un lit de roches ou un empilement de briques agencé pour chaque étage de stockage de chaleur sensible haute température et basse température 110, 120 du module de stockage de chaleur sensible. Selon ce mode de réalisation, il est envisageable de regrouper les deux étages de stockage de chaleur sensible haute température et basse température 110, 120 en un unique volume intérieur préférentiellement contenu dans une cuve 100 (comprenant avantageusement un lit de roches interne).

La figure 7 illustre un mode de réalisation non limitatif de la présente invention où le deuxième fluide, dans cet exemple l'air, échange avec deux milieux différents : le premier fluide dans un premier temps au niveau des échangeurs et le matériau de stockage présent dans la cuve 100 dans un deuxième temps.

De manière particulièrement avantageuse, le premier étage 110 de stockage de chaleur sensible haute température et le deuxième étage 120 de stockage de chaleur sensible basse température sont réunis pour former un seul volume intérieur de la cuve 100. Avantageusement, la cuve 100 comprend un matériau poreux et/ou structuré contenu dans le volume intérieur.

Le premier fluide est de préférence sous forme de vapeur d'eau lorsqu'il traverse le premier échangeur 210 ou sous forme d'eau liquide lorsqu'il traverse le deuxième échangeur 220. Dans ce mode de réalisation, le matériau de stockage présent dans la cuve 100 peut par exemple être un lit de roches ou un assemblage interne de briques. Un matériau poreux s'entend comme un matériau présentant des pores tel que des roches et un matériau structuré s'entend comme un matériau présentant une structure présentant un agencement de creux structurés tel que des briques. Le deuxième fluide, soit l'air dans ce mode de réalisation, n'est ici qu'un média. Dans cet exemple, il est avantageusement envisageable d'utiliser un unique lit de roches pour le stockage de l'énergie sensible des étages haute et basse températures 110, 120, le deuxième fluide, l'air, transitant au travers des premier et deuxième échangeurs 210, 220 raccordés en série permettant de récupérer, lors de la charge, la chaleur successivement sous forme de vapeur d'eau et d'eau à sous-refroidie.

Un avantage de cette configuration est son coût : l'air est une ressource naturelle qui n'est de ce fait pas coûteuse. Les roches ou les briques, quant à elles, sont également peu coûteuses.

Selon une possibilité, dans le cas où les deux étages sont regroupés dans un volume unique d'une cuve, avantageusement la cuve est remplie d'un matériau de stockage du type lit de roches ou briques. Le deuxième fluide peut être des sels fondus formant ainsi un « thermocline dual », permettant de minimiser les quantités de sels fondus et donc les coûts par rapport à la solution présentant deux cuves distinctes de sels fondus. Cette solution est plus chère (en capital) qu'une solution utilisant l'air, mais elle présente un coût d'opération moindre par l'utilisation de pompes (et non de ventilateurs pour l'air) comme moyens de circulation du fluide.

De manière avantageuse, si la stratégie envisagée ne met pas en oeuvre de recirculation, il peut être envisageable de rassembler les deux échangeurs 210 et 220 en un seul tel qu'illustré sur la figure 8, l'air traversant l'ensemble des nappes de tubes sans interruption, ce qui simplifie encore le dispositif et réduit les coûts.

La présente invention n'est pas limitée aux modes de réalisation précédemment décrits mais s'étend à tout mode de réalisation conforme à son esprit.

### REFERENCES

110. Premier étage de stockage de chaleur sensible haute température
111. Premier accès du premier étage de stockage de chaleur sensible haute température
112. Deuxième accès du premier étage de stockage de chaleur sensible haute température
120. Deuxième étage de stockage de chaleur sensible basse température
121. Premier accès du deuxième étage de stockage de chaleur sensible basse température
122. Deuxième accès du deuxième étage de stockage de chaleur sensible haute température
200. Enceinte d'échangeur
210. Premier échangeur de chaleur
211, 212, 213, 214. Premier, deuxième, troisième et quatrième accès au premier échangeur de chaleur
215, 225. Points de recirculation
220. Deuxième échangeur de chaleur
221, 222, 223, 224. Premier, deuxième, troisième et quatrième accès au deuxième échangeur de chaleur
240. Point intermédiaire
300. Module de stockage latent
301, 302. Premier, deuxième accès du module de stockage latent
501, 502. Premier, deuxième moyen de circulation
601, 602, 603, 604, 605, 606. Vannes de régulation
701, 702. Branches de recirculation
1100, 1200. Première, deuxième courbe de température du module de stockage latent

## Revendications

1. Dispositif de stockage d'énergie thermique comprenant :
- un premier fluide circulant dans un premier circuit fluidique comprenant un premier échangeur de chaleur (210), un deuxième échangeur de chaleur (220), et un module de stockage latent (300) comprenant un matériau à changement de phase agencé entre le premier échangeur (210) et le deuxième échangeur (220),
- un deuxième fluide circulant dans un deuxième circuit fluidique couplé thermiquement au premier fluide par l'intermédiaire du premier échangeur de chaleur (210) et du deuxième échangeur de chaleur (220),
**caractérisé en ce que** ledit deuxième circuit fluidique est constitué de moyens de raccordement et d'un module de stockage de chaleur sensible constitué d'un premier étage (110) de stockage de chaleur sensible haute température et d'un deuxième étage (120) de stockage de chaleur sensible basse température, chaque étage (110, 120) de stockage de chaleur sensible ayant une température de consigne contrôlée par la variation du débit du deuxième fluide en sortie et/ou en entrée de chacun des étages (110, 120).

2. Dispositif selon la revendication 1 dans lequel le seul module de stockage du deuxième circuit fluidique est ledit module de stockage de chaleur sensible constitué dudit premier étage (110) de stockage de chaleur sensible haute température et dudit deuxième étage (120) de stockage de chaleur sensible basse température.

3. Dispositif selon l'une quelconque des revendications précédentes dans lequel le deuxième circuit comprend des moyens de contrôle du débit du deuxième fluide en entrée et/ou sortie des échangeurs (210, 220), de préférence le débit du deuxième fluide est identique dans tout le circuit du deuxième fluide.

4. Dispositif selon l'une quelconque des revendications 1 à 2 dans lequel les moyens de raccordement dans le deuxième circuit fluidique comprennent des moyens de recirculation (701, 702) du deuxième fluide au niveau du premier échangeur (210) et/ou du deuxième échangeur (220), de préférence les moyens de recirculation comprennent des branches de recirculation (701, 702) agencées entre l'étage de stockage de chaleur sensible haute température (110) et le premier échangeur (210) et entre l'étage de stockage de chaleur sensible basse température (120) et le deuxième échangeur (220).

5. Dispositif selon la revendication précédente dans lequel le deuxième circuit comprend des moyens de contrôle du débit du deuxième fluide en entrée et/ou sortie des échangeurs (210, 220) et le débit du deuxième fluide est différent au niveau du premier échangeur (110) et du deuxième échangeur (120).

6. Dispositif selon l'une quelconque des revendications précédentes dans lequel le premier étage (110) de stockage de chaleur haute température et le deuxième étage (120) de stockage de chaleur basse température sont réunis pour former une cuve (100).

7. Dispositif selon la revendication précédente dans lequel la cuve (100) définit un volume intérieur comprenant un matériau poreux et/ou structuré, de préférence choisi parmi un lit de roches, des briques.

8. Dispositif selon l'une quelconque des revendications précédentes dans lequel le premier échangeur (210) et le deuxième échangeur sont réunis dans une enceinte (200).

9. Dispositif selon l'une quelconque des revendications précédentes dans lequel le premier fluide est configuré pour passer d'une phase vapeur à une phase liquide et inversement dans le dispositif, de préférence le premier fluide est de l'eau et/ou le deuxième fluide est choisi parmi l'un au moins parmi des sels fondus, l'air, ou l'eau.

10. Dispositif selon l'une quelconque des revendications précédentes dans lequel le matériau à changement de phase est choisi parmi des sels, des mélanges de sels, des hydrocarbures, des acides gras, des polyols ou des alliages métalliques.

11. Dispositif selon l'une quelconque des revendications précédentes dans lequel le premier circuit fluidique comprend un champ solaire au travers duquel circule le premier fluide.

12. Centrale solaire thermodynamique comprenant un dispositif selon l'une quelconque des revendications précédentes, de préférence à génération de vapeur directe.

13. Procédé de stockage de chaleur comprenant un dispositif selon l'une quelconque des revendications précédentes 1 à 11 comprenant :
- une étape de charge destinée à stocker de la chaleur dans le premier étage (110) de stockage de chaleur sensible haute température et dans le module de stockage latent (300) comprenant la détermination d'une température de consigne pour le premier fluide en sortie du premier échangeur de chaleur (210) ou d'une première température de consigne dans le premier étage (110) de stockage de chaleur sensible haute température du module de stockage de chaleur sensible et l'adaptation du débit du deuxième fluide en sortie et/ou en entrée de chacun des premier et deuxième étages (110, 120).
- une étape de décharge destinée à libérer de la chaleur du deuxième étage (120) de stockage de chaleur sensible basse température et le module de stockage l'étage latent (300) comprenant la détermination d'une température de consigne pour le premier fluide en sortie de du deuxième échangeur de chaleur (220) ou d'une deuxième température de consigne dans le deuxième étage (120) de stockage de chaleur sensible basse température du module de stockage de chaleur sensible et l'adaptation du débit du deuxième fluide en sortie et/ou en entrée de chacun des étages (110, 120).

14. Procédé selon la revendication précédente dans lequel le débit du deuxième fluide en sortie du deuxième étage de stockage de chaleur sensible basse température (120) est identique au débit du deuxième fluide en entrée du premier étage de stockage de chaleur sensible haute température (110) ou comprenant dans l'étape de charge une recirculation du deuxième fluide au niveau du premier échangeur (210) consistant à mélanger du deuxième fluide en provenance du premier étage de stockage de chaleur sensible haute température (110) au deuxième fluide en provenance du deuxième échangeur de chaleur (220).

15. Procédé selon la revendication 13 ou 14 comprenant dans l'étape de décharge une recirculation du deuxième fluide au niveau du deuxième échangeur (220) consistant à mélanger du deuxième fluide en provenance du deuxième étage de stockage de chaleur sensible basse température (120) au deuxième fluide en provenance du premier échangeur (210).

## Patentansprüche

1. Vorrichtung zum Speichern von Wärmeenergie, enthaltend:
- ein erstes Fluid, das in einem ersten Strömungskreis strömt, der einen ersten Wärmetauscher (210), einen zweiten Wärmetauscher (220) und ein Latentspeichermodul (300) aufweist, das ein Phasenwechselmaterial enthält, das zwischen dem ersten Wärmetauscher (210) und dem zweiten Wärmetauscher (220) angeordnet ist,
- ein zweites Fluid, das in einem zweiten Strömungskreis strömt und über den ersten Wärmetauscher (210) und den zweiten Wärmetauscher (220) thermisch mit dem ersten Fluid gekoppelt ist,
**dadurch gekennzeichnet, dass**
der zweite Strömungskreis aus Anschlussmitteln und einem Wärmespeichermodul zum Speichern von fühlbarer Wärme besteht, das aus einer ersten Wärmespeicherstufe (110) zum Speichern von fühlbarer Wärme hoher Temperatur und aus einer zweiten Wärmespeicherstufe (120) zum Speichern von fühlbarer Wärme niedriger Temperatur besteht, wobei jede Wärmespeicherstufe (110, 120) zum Speichern von fühlbarer Wärme eine Solltemperatur hat, die durch die Schwankung der Strömungsrate des zweiten Fluids am Auslass und/oder Einlass einer jeden der Stufen (110, 120) gesteuert wird.

2. Vorrichtung nach Anspruch 1, wobei das einzige Speichermodul des zweiten Strömungskreises das Wärmespeichermodul zum Speichern von fühlbarer Wärme ist, das aus der ersten Wärmespeicherstufe (110) zum Speichern von fühlbarer Wärme hoher Temperatur und aus der zweiten Wärmespeicherstufe (120) zum Speichern von fühlbarer Wärme niedriger Temperatur besteht.

3. Vorrichtung nach einem der vorangehenden Ansprüche, wobei der zweite Kreis Steuermittel zum Steuern der Strömungsrate des zweiten Fluids am Einlass und/oder am Auslass der Wärmetauscher (210, 220) enthält, wobei vorzugsweise die Strömungsrate des zweiten Fluid in dem gesamten Kreis des zweiten Fluids identisch ist.

4. Vorrichtung nach einem der Ansprüche 1 bis 2, wobei die Anschlussmittel in dem zweiten Strömungskreis Rücklaufmittel (701, 702) für das zweite Fluid im Bereich des ersten Wärmetauschers (210) und/oder des zweiten Wärmetauschers (220) enthalten, wobei die Rücklaufmittel vorzugsweise Rücklaufzweige (701, 702) enthalten, die zwischen der Wärmespeicherstufe (110) zum Speichern von fühlbarer Wärme hoher Temperatur und dem ersten Wärmetauscher (210) und zwischen der Wärmespeicherstufe (120) zum Speichern von fühlbarer Wärme niedriger Temperatur und dem zweiten Wärmetauscher (220) angeordnet sind.

5. Vorrichtung nach dem vorangehenden Anspruch, wobei der zweite Kreis Steuermittel zum Steuern der Strömungsrate des zweiten Fluids am Einlass und/oder am Auslass der Wärmetauscher (210, 220) enthält, wobei die Strömungsrate des zweiten Fluids im Bereich des ersten Wärmetauschers (110) und des zweiten Wärmetauschers (120) unterschiedlich ist.

6. Vorrichtung nach einem der vorangehenden Ansprüche, wobei die erste Wärmespeicherstufe (110) zum Speichern von Wärme hoher Temperatur und die zweite Wärmespeicherstufe (120) zum Speichern von Wärme niedriger Temperatur zu einem Behälter (100) zusammengefasst sind.

7. Vorrichtung nach dem vorangehenden Anspruch, wobei der Behälter (100) einen Innenraum definiert, der ein poröses und/oder strukturiertes Material, vorzugsweise ausgewählt aus einem Steinbett, Ziegelsteinen, enthält.

8. Vorrichtung nach einem der vorangehenden Ansprüche, wobei der erste Wärmetauscher (210) und der zweite Wärmetauscher in einem Gehäuse (200) zusammengefasst sind.

9. Vorrichtung nach einem der vorangehenden Ansprüche, wobei das erste Fluid dazu ausgelegt ist, in der Vorrichtung von einer Dampfphase zu einer Flüssigphase und umgekehrt überzugehen, wobei vorzugsweise das erste Fluid Wasser ist und/oder das zweite Fluid ausgewählt ist aus zumindest einem aus geschmolzenen Salzen, Luft oder Wasser.

10. Vorrichtung nach einem der vorangehenden Ansprüche, wobei das Phasenwechselmaterial ausgewählt ist aus Salzen, Salzgemischen, Kohlenwasserstoffen, Fettsäuren, Polyolen oder Metalllegierungen.

11. Vorrichtung nach einem der vorangehenden Ansprüche, wobei der erste Strömungskreis ein Solarfeld enthält, durch welches das erste Fluid strömt.

12. Sonnenwärmekraftwerk, enthaltend eine Vorrichtung nach einem der vorangehenden Ansprüche, vorzugsweise mit direkter Dampferzeugung.

13. Verfahren zum Speichern von Wärme mit einer Vorrichtung nach einem der vorangehenden Ansprüche 1 bis 11, umfassend:
- einen Schritt des Ladens, der dazu bestimmt ist, Wärme in der ersten Wärmespeicherstufe (110) zum Speichern von fühlbarer Wärme hoher Temperatur und in dem Latentspeichermodul (300) zu speichern, umfassend das Bestimmen einer Solltemperatur für das erste Fluid am Auslass des ersten Wärmetauschers (210) oder einer ersten Solltemperatur in der ersten Wärmespeicherstufe (110) zum Speichern von fühlbarer Wärme hoher Temperatur des Wärmespeichermoduls für fühlbare Wärme, sowie das Anpassen der Strömungsrate des zweiten Fluids am Auslass und/oder am Einlass einer jeden aus erster und zweiter Stufe (110, 120),
- einen Schritt des Entladens, der dazu bestimmt ist, Wärme aus der zweiten Wärmespeicherstufe (120) zum Speichern von fühlbarer Wärme niedriger Temperatur und aus dem Latentspeichermodul (300) freizugeben, umfassend das Bestimmen einer Solltemperatur für das erste Fluid am Auslass des zweiten Wärmetauschers (220) oder einer zweiten Solltemperatur in der zweiten Wärmespeicherstufe (110) zum Speichern von fühlbarer Wärme niedriger Temperatur des Wärmespeichermoduls für fühlbare Wärme, sowie das Anpassen der Strömungsrate des zweiten Fluids am Auslass und/oder am Einlass einer jeden der Stufen (110, 120).

14. Verfahren nach dem vorangehenden Anspruch, wobei die Strömungsrate des zweiten Fluids am Auslass der zweiten Wärmespeicherstufe (120) zum Speichern von fühlbarer Wärme niedriger Temperatur identisch zur Strömungsrate des zweiten Fluids am Einlass der ersten Wärmespeicherstufe (110) zum Speichern von fühlbarer Wärme hoher Temperatur ist, oder umfassend bei dem Schritt des Ladens einen Rücklauf des zweiten Fluids im Bereich des ersten Wärmetauschers (210), der darin besteht, das zweite Fluid aus der ersten Wärmespeicherstufe (110) zum Speichern von fühlbarer Wärme hoher Temperatur mit dem zweiten Fluid aus dem zweiten Wärmetauscher (220) zu mischen.

15. Verfahren nach Anspruch 13 oder 14, umfassend bei dem Schritt des Entladens einen Rücklauf des zweiten Fluids im Bereich des zweiten Wärmetauschers (220), der darin besteht, das zweite Fluid aus der zweiten Wärmespeicherstufe (120) zum Speichern von fühlbarer Wärme niedriger Temperatur mit dem zweiten Fluid aus dem ersten Wärmetauscher (210) zu mischen.

## Claims

1. Thermal energy storage device comprising:
- a first fluid circulating in a first fluid circuit comprising a first heat exchanger (210), a second heat exchanger (220), and a latent storage module (300) comprising a phase change material arranged between the first exchanger (210) and the second exchanger (220),
- a second fluid circulating in a second fluid circuit thermally coupled to the first fluid by way of the first heat exchanger (210) and the second heat exchanger (220),
**characterised in that** said second fluid circuit is constituted of connection means and a sensitive heat storage module constituted of a first high-temperature sensitive heat storage stage (110) and a second low-temperature sensitive heat storage stage (120), each sensitive heat storage stage (110, 120) having a setpoint temperature controlled by the variation of the stream of the second fluid exiting and/or entering each of the stages (110, 120).

2. Device according to claim 1, wherein only the storage module of the second fluid circuit is said sensitive heat storage module constituted of said first high-temperature sensitive heat storage stage (110) and of said second low-temperature sensitive heat storage stage (120).

3. Device according to any one of the preceding claims, wherein the second circuit comprising means for controlling the stream of the second fluid entering and/or exiting the exchangers (210, 220), preferably the stream of the second fluid is identical in all the circuit of the second fluid.

4. Device according to any one of claims 1 to 2, wherein the connection means in the second fluid circuit comprise means for recirculating (701, 702) the second fluid at the first exchanger (210) and/or the second exchanger (220), preferably the recirculation means comprise recirculation arms (701, 702) arranged between the high-temperature sensitive heat storage stage (110) and the first exchanger (210) and between the low-temperature sensitive heat storage stage (120) and the second exchanger (220).

5. Device according to the preceding claim, wherein the second circuit comprises means for controlling the stream of the second fluid entering and/or exiting the exchangers (210, 220) and the stream of the second fluid is different at the first exchanger (110) and the second exchanger (120).

6. Device according to any one of the preceding claims, wherein the first high-temperature heat storage stage (110) and the second low-temperature heat storage stage (120) are combined to form a tank (100).

7. Device according to the preceding claim, wherein the tank (100) defines an inner volume comprising a porous and/or structured material, preferably selected from among a bed of rocks, of bricks.

8. Device according to any one of the preceding claims, wherein the first exchanger (210) and the second exchanger are combined in an enclosure (200).

9. Device according to any one of the preceding claims, wherein the first fluid is configured to pass from a vapour phase to a liquid phase and conversely in the device, preferably the first fluid is water and/or the second fluid is selected from among at least one from among molten salts, air, or water.

10. Device according to any one of the preceding claims, wherein the phase change material is selected from among salts, salt mixtures, hydrocarbons, fatty acids, polyols or metal alloys.

11. Device according to any one of the preceding claims, wherein the first fluid circuit comprises a solar field through which the first fluid circulates.

12. Thermodynamic solar power station comprising a device according to any one of the preceding claims, preferably with direct vapour generation.

13. Method for storing heat comprising a device according to any one of the preceding claims 1 to 11, comprising:
- a charging step, configured to store heat in the first high-temperature sensitive heat storage stage (110) and in the latent storage module (300) comprising the determination of a setpoint temperature for the first fluid exiting the first heat exchanger (210) or a first setpoint temperature in the first high-temperature sensitive heat storage stage (110) of the sensitive heat storage module and the adaptation of the stream of the second fluid exiting and/or entering each of the first and second stages (110, 120).
- a discharging step configured to release heat from the second low-temperature sensitive heat storage stage (120) and the storage module, the latent stage (300) comprising the determination of a setpoint temperature for the first fluid exiting the second heat exchanger (220) or of a second setpoint temperature in the second low-temperature sensitive hear storage stage (120) of the sensitive heat storage module and the adaptation of the stream of the second fluid exiting and/or entering each of the stages (110, 120).

14. Method according to the preceding claim, wherein the stream of the second fluid exiting the second low-temperature sensitive heat storage stage (120) is identical to the stream of the second fluid entering the first high-temperature sensitive hear storage stage (110) or comprising in the charging step, a recirculation of the second fluid at the first exchanger (210) consisting of mixing the second fluid coming from the first high-temperature sensitive heat storage stage (110) with the second fluid coming from the second heat exchanger (220).

15. Method according to claim 13 or 14 comprising in the discharging step, a recirculation of the second fluid at the second exchanger (220) consisting of mixing the second fluid coming from the second low-temperature sensitive heat storage stage (120) with the second fluid coming from the first exchanger (210).
